# DEMANDE DE BREVET EUROPEEN

(11) **EP 2 314 504 A1**
(43) Date de publication de la demande: **27.04.2011**
(21) Numéro de dépôt: 10188624.0
(22) Date de dépôt: 22.10.2010
(51) Int. Cl.: B63B 1/32

(54) **Coque à fond plat, banc et embarcation correspondants**

(30) Priorité: 23.10.2009 FR 0957473; 23.11.2009 FR 0958286
(71) Demandeur: Gaboriau, Camille, 22690 Pleudihen (FR)
(72) Inventeur: Gaboriau, Camille, 22690 Pleudihen (FR)
(74) Mandataire: Larcher, Dominique

(57) **Abrégé**

L'invention concerne une coque (11) d'une embarcation (10), notamment d'une embarcation à charpente de bois, dont la carène présente un fond (22) plat.

Selon l'invention, ledit fond (22) présente, sur sa face inférieure destinée à venir en contact avec l'eau, au moins une portion de contour (32) saillant vers l'extérieur de ladite embarcation, perpendiculairement au plan dudit fond (22), ladite portion de contour formant une nervure qui s'étend sur l'ensemble du contour dudit fond jusqu'à venir à l'aplomb des bordages de ladite coque.

## Description

### 1. Domaine de l'invention

Le domaine de l'invention est celui de la construction navale.

Plus précisément, l'invention concerne une embarcation à fond sensiblement plat.

L'invention s'applique notamment, mais non exclusivement, aux embarcations à charpente de bois massif ou lamellé-collé, ou de contreplaqué, propulsées par avirons et/ou à la voile.

### 2. Etat de la technique

Classiquement, les embarcations à fond plat sont appréciées du fait qu'elles permettent de s'échouer de façon stable et sans gîte sur un banc de sable, et notamment sans sortir de béquilles ou tout autre support analogue, et plus généralement du fait qu'elles possèdent un faible tirant d'eau.

On connaît ainsi depuis longtemps des embarcations en bois à fond plat, ou sole selon la terminologie employée par les charpentiers de marine, et par exemple des barques manoeuvrables à l'aide de rames.

On a également proposé des embarcations à fond plat à coque en tôle d'aluminium, en polyester renforcé, ou en polyéthylène. Un exemple bien connu des centres de voile est 1' « Optimist »(marque déposée).

Ces techniques connues présentent l'inconvénient d'offrir de faibles performances hydrodynamiques, ce qui limite bien souvent la distance qui peut être raisonnablement parcourue avec ce type d'embarcations et/ou restreint leur usage à l'apprentissage de la voile.

Un autre inconvénient de ces techniques est, dans certains cas, le poids de l'embarcation qui peut dépasser trente kilogrammes, et rend donc l'embarcation difficile à déplacer par une personne seule.

### 3. Objectifs de l'invention

L'invention a notamment pour objectif de pallier les inconvénients de ces techniques de l'art antérieur.

Plus précisément, un objectif de l'invention est de proposer une embarcation performante, en termes notamment de glisse, de manoeuvrabilité et de stabilité.

Un objectif de l'invention est également de fournir une embarcation légère et résistante.

Un autre objectif de l'invention est de fournir une embarcation simple à mettre en oeuvre et peu coûteuse à fabriquer.

Encore un objectif de l'invention est de fournir une telle embarcation qui soit aisée à stocker.

### 4. Exposé de l'invention

Ces objectifs, ainsi que d'autres qui apparaîtront plus clairement par la suite, sont atteints à l'aide d'une coque d'une embarcation, notamment d'une embarcation à charpente de bois, dont la carène présente un fond plat.

Selon l'invention, ledit fond présente, sur sa face inférieure destinée à venir en contact avec l'eau, au moins une portion de contour saillant vers l'extérieur de ladite embarcation, perpendiculairement au plan dudit fond, ladite portion de contour formant une nervure qui s'étend sur l'ensemble du contour dudit fond jusqu'à venir à l'aplomb des bordages de ladite coque.

Ainsi, de façon inédite, on atténue au moins partiellement l'effet négatif, sur la glisse, de l'arête vive présente entre les bordages et le fond plat des embarcations de l'art antérieur. Les inventeurs estiment en effet pouvoir bénéficier, au moins à certaines allures, d'un recollement des couches limites de l'écoulement d'eau derrière le bord d'attaque correspondant à ladite portion du contour, ou en d'autres termes d'une réduction de la traînée hydrodynamique de l'embarcation.

Par ailleurs, la portion de contour crée un effet de dépression sous la coque qui augmente son adhérence. L'invention propose ainsi une solution particulièrement simple pour assurer le maintien d'un cap, sans dévier de la trajectoire visée.

Du fait que ladite portion de contour s'étend sur l'ensemble du contour dudit fond, on améliore la portance de la coque et sa stabilité au phénomène de gîte et/ou à l'assaut des vagues transversales. Une explication vraisemblable de cette manifestation bénéfique peut trouver son origine au moins en partie dans la formation d'une poche d'air compressible, piégée sous le fond de la coque, qui génère une portance additionnelle de type aérostatique.

Par ailleurs, on forme une surface d'appui uniforme sur le contour, ce qui est appréciable lorsque l'embarcation est hors d'eau. On réduit en effet ainsi le risque d'enfoncement ou de poinçonnage de la coque.

Préférentiellement, ladite portion de contour présente un profil sensiblement arrondi et/ou oblong.

Ainsi, on améliore l'écoulement en évitant les points d'arrêt.

Selon un aspect particulier de l'invention, ladite portion de contour présente une épaisseur comprise entre un centimètre et trois centimètres.

Avantageusement, ledit fond comprend des moyens de solidarisation d'un pied de mât et/ou d'un puit de dérive.

Selon un mode de réalisation particulièrement avantageux de l'invention, une telle coque comprend au moins un élément raidisseur transversal monobloc s'étendant sur ledit fond et une portion substantielle des bordages de ladite coque.

Ainsi on simplifie la mise en oeuvre de la coque. On obtient également une coque plus robuste ou plus légère à résistance égale.

L'invention concerne également un banc pour embarcation apte à être logé dans une coque telle que décrite ci-dessus, à une distance prédéterminée dudit fond.

Selon l'invention, un tel banc est formé d'un seul tenant et comprend au moins un orifice de passage d'un mât et/ou d'une dérive.

On simplifie ainsi la fabrication et le montage de l'embarcation.

Selon un aspect avantageux de l'invention, un tel banc porte des moyens fixes de flottabilité après dessalage.

On obtient ainsi une embarcation insubmersible. Il peut être envisagé de mettre en oeuvre, par exemple, des caissons de flottabilité ou de placer sous le banc des bidons étanches ou des mousses légères de polyuréthane.

De façon préférentielle, un banc tel que celui décrit ci-dessus comprend des moyens de maintien dudit mât et/ou dudit puit de dérive.

Ainsi, on limite les risques de déformation irréversible, notamment par flexion, ou de cisaillement du mât et/ou du puit de dérive, du fait d'un double maintien par le fond et par le banc. On peut donc diminuer en conséquence la résistance requise du fond pour alléger l'embarcation, par exemple en réduisant l'épaisseur du fond.

Selon un aspect particulier de l'invention, lesdits moyens de maintien sont montés sur la face inférieure dudit banc.

Ainsi, on libère la surface supérieure du banc.

Dans au moins un mode réalisation avantageux de l'invention, une telle coque est configurée de sorte à pouvoir prendre une position de stockage dans laquelle elle s'emboîte au moins partiellement dans au moins une embarcation similaire formée d'au moins une coque identique et d'un banc du type de ceux décrits ci-dessus, et dans laquelle au moins ladite portion de contour repose sur ledit banc de l'embarcation similaire.

Le stockage et le transport des coques ou des embarcations est ainsi simplifié.

L'invention concerne encore une embarcation comprenant une coque et un banc tels que ceux décrits ci-dessus. Il peut notamment s'agir d'une embarcation propulsée par aviron et/ou à la voile, ou à l'aide d'une godille.

L'invention porte également sur un gouvernail apte à être solidarisé à l'arrière d'une coque selon l'invention. Un tel gouvernail comprend un corps présentant une extrémité inférieure prévue pour s'étendre, lorsqu'il est solidarisé à l'arrière de la coque, dans le prolongement du fond de la coque, et un safran rabattable solidarisé à rotation à l'extrémité inférieure entre :
- une position rabattue dans laquelle il s'étend dans le prolongement du corps, et
- une position relevée dans laquelle il est relevé à l'arrière du corps de manière telle qu'il ne s'étende pas au delà de l'extrémité inférieure du corps.

La mise en oeuvre d'un tel gouvernail permet de relever le safran pour laisser la coque s'échouer par exemple sur un banc de sable sans devoir désolidariser le gouvernail de la coque. Ceci est particulièrement avantageux pour les coques présentant un tableau arrière fortement incliné. Le démontage du gouvernail depuis l'intérieur de ces coques se révèle en effet être particulièrement fastidieux.

### 5. Liste des figures

D'autres caractéristiques et avantages de l'invention apparaîtront plus clairement à la lecture de la description suivante d'un mode de réalisation avantageux de l'invention, donnée à titre de simple exemple illustratif et non limitatif, et des dessins annexés, parmi lesquels :
- la figure 1 est une représentation en perspective d'un mode de réalisation d'une embarcation selon l'invention ;
- la figure 2 est une vue partielle en coupe de l'embarcation présentée sur la figure 1, suivant un plan de symétrie médian vertical ;
- la figure 3A est une demi-vue transversale de détail, en coupe suivant A-A, de la coque de l'embarcation présentée sur la figure 1;
- la figure 3B est une vue du dessous de la coque de l'embarcation présentée sur la figure 1 ;
- la figure 3C est une vue en coupe d'une variante d'une nervure prévue sous la sole ;
- la figure 4 est une vue de dessus de l'embarcation présentée figure 1, démâtée ;
- 1a figure 5 est une vue de détail du gréement de l'embarcation présentée figure 1 ;

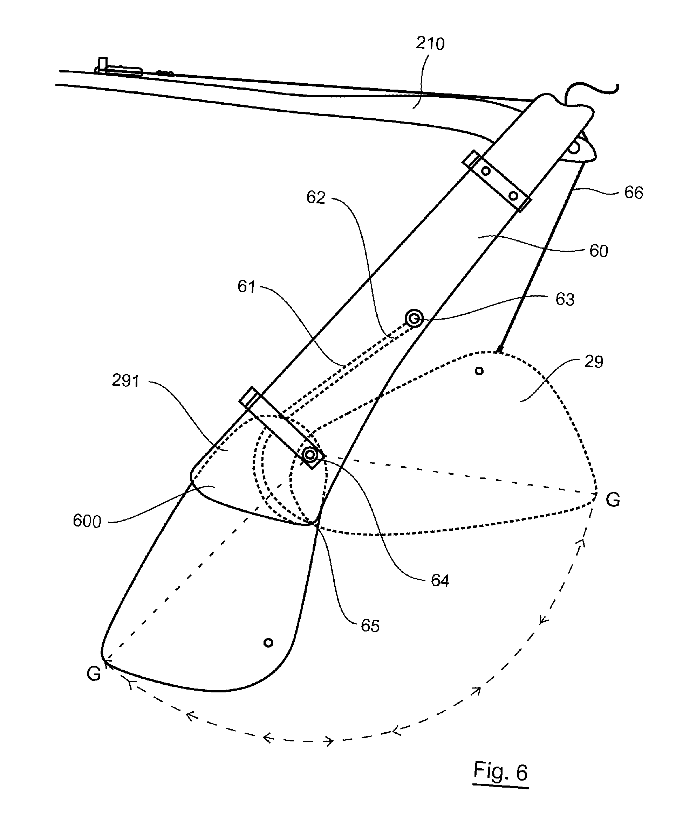

- la figure 6 est une vue de détail d'un gouvernail à safran rabattable selon l'invention.

### 6. Description détaillée de l'invention

### 6.1. Rappel du principe de l'invention

Comme déjà indiqué, le principe général de l'invention repose donc sur la mise en oeuvre d'au moins une portion formant une nervure perpendiculaire sur le contour du fond plat d'une embarcation, permettant d'améliorer les propriétés hydrodynamiques de la carène de cette embarcation.

### 6.2. Exemple de mode de réalisation de l'invention

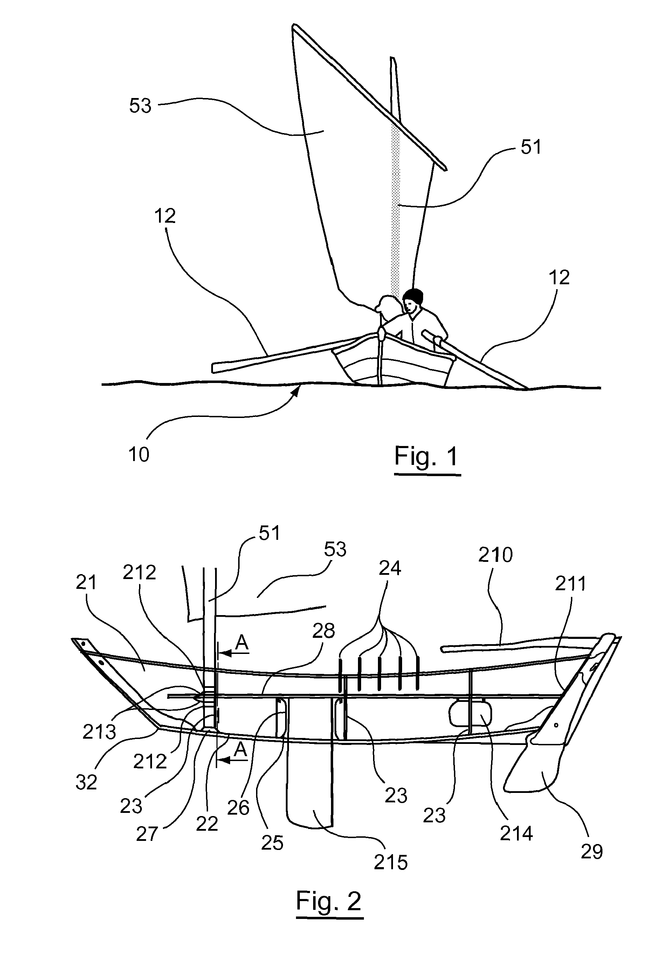

On a représenté un mode de réalisation d'une embarcation légère 10 selon l'invention sur la figure 1, naviguant sur un plan d'eau, dont l'aspect général évoque un doris. Cette embarcation légère 10 de petite taille, destinée notamment aux écoles de voile, porte la dénomination de fantaisie de « mini-gab ».

Les pièces de la coque 11 de cette embarcation 10, en bois, ont été assemblées et étanchéifiées suivant les principes de la charpenterie de marine traditionnelle.

Cette embarcation 10 est propulsée à l'aide d'avirons 12, réalisés dans une essence de résineux dénommée « Spruce », et à la voile.

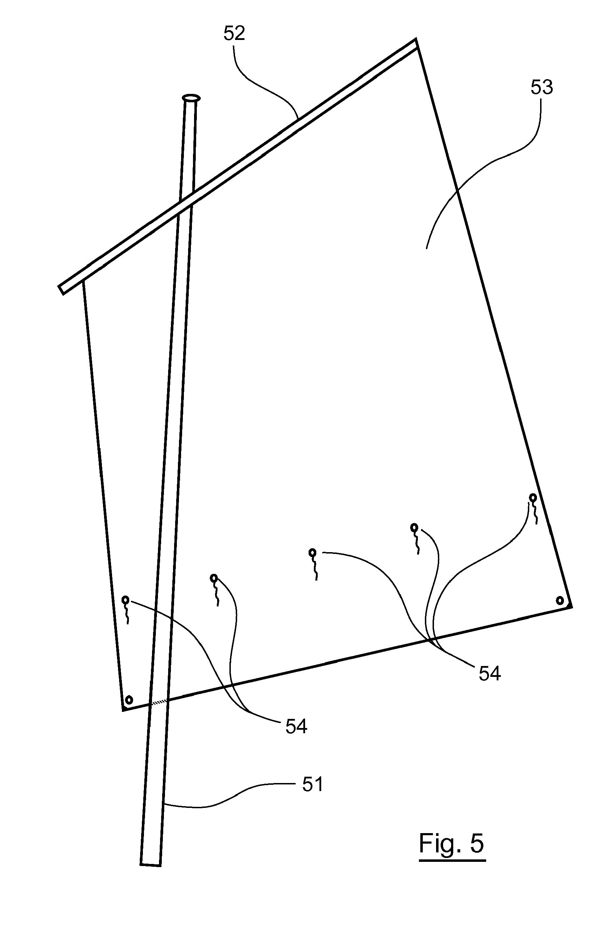

Comme on peut le voir en détail sur la figure 5, le gréement de cette embarcation 10 comporte un mât 51 à pible, long de 3,4 mètres, maintenu par une drisse de grand voile et haubané, portant une vergue 52 qui soutient une voile quadrangulaire 53, ou voile aurique, d'une surface sensiblement égale à 4,5 m², présentant une bande de ris 54 unique. Dans une variante de ce mode de réalisation, une ou plusieurs bandes de ris additionnelles peuvent également être prévues.

Sur la figure 2, on a représenté l'embarcation 10 dans une vue en coupe suivant un plan de symétrie médian vertical, encore appelé « plan de la ligne de quille » par abus de langage.

La coque 11 comprend à bâbord et à tribord des bordages à clin constitués de bordés minces de bois 21, et un fond 22 sensiblement plat, encore appelé sole dans la suite de la description. Des cabillots 24 sont prévus sur chacun des bordages, pour bloquer les cordages.

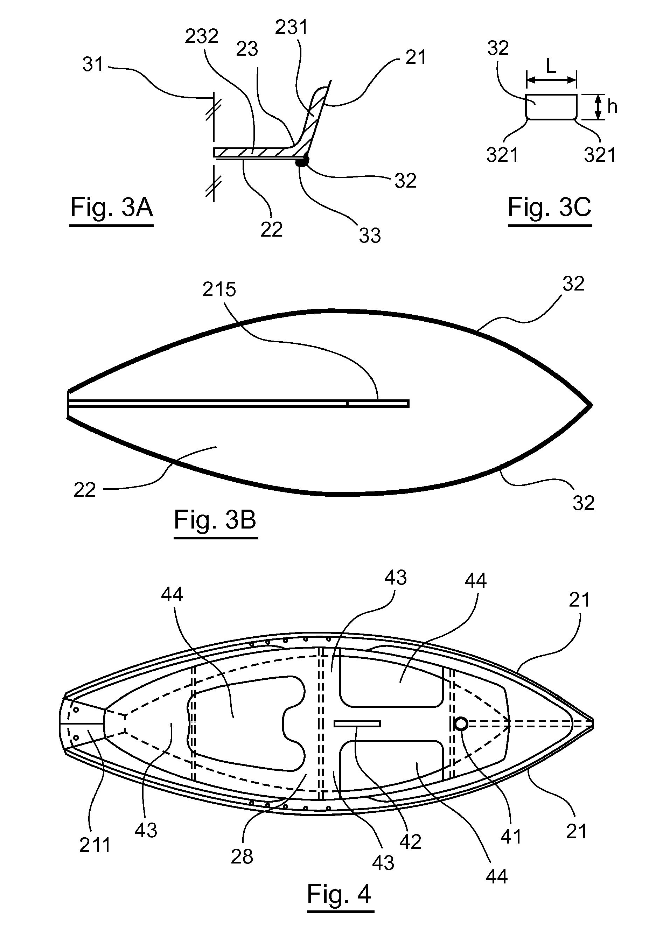

Selon un aspect original de l'invention, les bordés 21 sont soutenus par trois éléments raidisseurs monoblocs 23, en forme de « U », dont les branches 231, formant membrures, s'étendent d'un bordage à l'autre jusqu'aux francs-bords, tel qu'il apparaît dans la demi-vue en coupe selon A-A illustrée figure 3A (la partie bâbord de l'embarcation se déduit immédiatement par symétrie par rapport à l'axe 31). La base 232 de ces éléments 23 est par ailleurs fixée sur la sole 22 pour participer au renfort de cette dernière, à la manière d'une varangue.

Sur la figure 3A, on remarque que la face inférieure de la sole 22 présente à bâbord et tribord une saillie périphérique 32 semi-oblongue dépassant de deux centimètres vers le bas perpendiculairement au plan défini par la sole 22, dans ce mode de réalisation de l'invention.

Comme on peut le voir sur la figure 3B, dans une vue de dessous de la coque, cette saillie 32 forme une nervure continue, d'épaisseur et de section constantes, sur l'ensemble du contour sensiblement elliptique de la face inférieure de la sole 22. Avantageusement, le bord 33 de la nervure 32 est sensiblement arrondi pour permettre de guider l'écoulement d'eau sous le fond de la coque.

Dans des variantes de ce mode de réalisation, il peut également être envisagé de faire varier l'épaisseur, le profil et/ou d'interrompre la nervure saillante sur au moins un segment prédéterminé du contour de la sole. La nervure 32 pourra par exemple se présenter sous la forme d'un tasseau de bois de forme essentiellement quadrangulaire présentant une largeur « L » et une hauteur « h » comprises entre 1 et 3 centimètres, et dont les faces latérales sont reliées à la face inférieure par des congés 321 (cf. figure 3C).

Il convient de noter que la mise en oeuvre d'une nervure saillante à la jonction entre le contour de la sole et les bordages et des éléments raidisseurs monoblocs 23 renforce la coque, ce qui autorise l'utilisation de planches de bordé de faibles épaisseurs, et confère de la légèreté à l'embarcation 10, dont la masse reste inférieure à vingt-sept kilogrammes.La sole 22 présente sur sa face supérieure un bossage creux 25 qui forme la base d'un puit de dérive 26 et une emplanture 27 sur laquelle est fixé le pied du mât 51.

Un banc 28 d'un seul tenant est logé dans la coque 11 à une distance prédéterminée de la sole 22.

On remarquera que la géométrie de la carène de la coque 11 a été avantageusement étudiée pour pouvoir emboîter partiellement l'embarcation 10, une fois démâtée, dans une embarcation identique, afin de faciliter le stockage et le transport de ces embarcations. Afin d'assurer un bon agencement réciproque des deux embarcations, la coque 11 est configurée de sorte que la nervure 32 de la première embarcation repose sur la face supérieure du banc de la seconde embarcation.

Sur la figure 4, on peut voir que le banc 28 comprend un orifice 41 de passage circulaire pour le mât 51 et un orifice de passage sensiblement rectangulaire 42 permettant de glisser une dérive sabre 215. Ce banc 28 est également doté de surfaces 43 sur lesquelles les occupants de l'embarcation peuvent s'asseoir et d'ouvertures 44 pour faire passer leurs jambes et/ou accéder à l'espace de rangement sous le banc.

Le banc 28 agit avantageusement comme support du mât 51 et du pied de dérive 26, dans ce mode de réalisation de l'invention.

Deux manchons souples en cuir 212 sont en effet prévus, respectivement au-dessus et au-dessous du banc 28 pour maintenir le mât 51. Ces manchons 212 étant fixés à la face inférieure du banc 28 par l'intermédiaire de câbles torsadés 213, on retient ainsi, de façon astucieuse, le mât à l'aide du banc 28.

Le puit de dérive 26 est par ailleurs solidarisé par vissage, ou par tout autre technique de fixation convenable, telle que par exemple par collage, par clippage, ..., à la face inférieure du banc 28, ce qui consolide la structure de l'embarcation. de flottabilité après dessalage.

D'autre part, des bidons étanches 214 sont fixés à la face inférieure du banc, afin d'offrir une embarcation insubmersible en cas de dessalage.

La sole 22 présente une dérive 34. Cette dérive 34 s'étend depuis le bord arrière de la dérive sabre 215 jusqu'au tableau arrière 214 de la coque 11.

On a également prévu, dans ce mode de réalisation de l'invention, de monter sur le tableau arrière 211 de la coque 11 un gouvernail muni, à son extrémité inférieure 600, d'un safran rabattable 29 afin de contrôler la direction de l'embarcation. Ce safran rabattable 29 pivotant sur des ferrures est actionné par une barre 210. On peut également prévoir un tire-veille pour manoeuvrer ce safran 29.

Le gouvernail comprend un corps 60 présentant des moyens de solidarisation au tableau arrière 214. Ce corps 60 présente une extrémité inférieure 600. La longueur du corps 60 est choisie de manière telle que l'extrémité inférieure s'étende dans le prolongement du fond 22 ou de la dérive 34. Il est traversé par un perçage 61 débouchant sur une paroi latérale extérieure. Ce perçage 61 permet de loger un élément de rappel élastique constitué par un sandow 62 dont une première extrémité est solidarisée au corps 60 par un noeud 63. Dans une variante, d'autres moyens de rappel élastique pourront être mis en oeuvre. Le diamètre du perçage 61 est légèrement supérieur au diamètre du sandow 62 afin d'éviter que ce dernier ne s'use. Le corps 60 est rainuré en sorte que le safran rabattable 29 puisse y être logé et solidarisé au moyen d'un boulon 64 autour duquel il peut pivoter. L'autre extrémité du sandow 62 est solidarisée à l'avant du safran rabattable 29 par un noeud 65. La partie supérieure 291 du safran rabattable 29 présente une rainure dans laquelle une partie inférieure du sandow 62 peut venir se dissimuler lorsque le safran rabattable 29 est rabattu.

Le safran rabattable 29 est mobile en rotation autour du boulon 64 par rapport au corps 60 du gouvernail entre :
- une position rabattue dans laquelle il s'étend dans le prolongement du corps 60, et
- une position relevée dans laquelle il est relevé à l'arrière du corps 60 de manière telle qu'il ne s'étende pas au delà de l'extrémité inférieure 600 du corps 60 (représentée en pointillés).

Un bout 66 solidarisé au safran rabattable 29 est actionnable depuis l'extrémité de la barre 210 de manière à permettre le passage du safran rabattable 29 de l'une à l'autre de ses positions.

### 6.3. Caractéristiques optionnelles et autres avantages de l'invention

Dans des variantes de l'exemple de mode de réalisation de l'invention détaillé ci-dessus, il peut également être envisagé de propulser l'embarcation à l'aide d'une godille.

L'invention ne se limite pas au mode de réalisation de l'embarcation détaillé ci-dessus, mais peut être mise en oeuvre plus généralement pour tout type d'embarcation à fond plat.

## Revendications

**1.** Coque (11) d'une embarcation (10), notamment d'une embarcation à charpente de bois, dont la carène présente un fond (22) plat, **caractérisée en ce que** ledit fond (22) présente, sur sa face inférieure destinée à venir en contact avec l'eau, au moins une portion de contour (32) saillant vers l'extérieur de ladite embarcation, perpendiculairement au plan dudit fond (22), ladite portion de contour formant une nervure qui s'étend sur l'ensemble du contour dudit fond jusqu'à venir à l'aplomb des bordages de ladite coque.

**1.** Coque selon la revendication 1, **caractérisée en ce que** ladite portion de contour (32) présente un profil sensiblement arrondi et/ou oblong.

**2.** Coque selon l'une des revendications 1 ou 2, **caractérisée en ce que** ladite portion de contour (32) présente une épaisseur comprise entre un et trois centimètres.

**3.** Coque selon l'une quelconque des revendications 1 à 3, **caractérisée en ce que** ledit fond (22) comprend des moyens de solidarisation d'un pied de mât (51) et/ou d'un puit de dérive (26).

**4.** Coque selon l'une quelconque des revendications 1 à 4, **caractérisée en ce qu'**elle comprend au moins un élément raidisseur transversal monobloc (23) s'étendant sur ledit fond (22) et une portion substantielle des bordages de ladite coque (11).

**5.** Coque selon l'une quelconque des revendication 1 à 5, **caractérisée en ce qu'**elle comprend un banc (28) logé dans ladite coque (11) à une distance prédéterminée dudit fond (22), ledit banc (28) étant formé d'un seul tenant et comprenant au moins un orifice de passage (41, 42) d'un mât et/ou d'une dérive.

**6.** Coque selon la revendication 6, **caractérisé en ce que** ledit banc (28) porte des moyens fixes de flottabilité après dessalage.

**7.** Coque selon la revendication 7, **caractérisé en ce que** ledit banc (28) comprend des moyens de maintien dudit mât (51) et/ou d'un puit de dérive (26).

**8.** Coque selon la revendication 8, **caractérisé en ce que** lesdits moyens de maintien sont montés sur la face inférieure dudit banc (28).

**9.** Coque (11) selon l'une des revendications 6 à 9, **caractérisée en ce qu'**elle est configurée de sorte à pouvoir prendre une position de stockage dans laquelle elle s'emboîte au moins partiellement dans au moins une embarcation (10) similaire formée d'au moins une coque (11) identique et d'un banc (28), et au moins ladite portion de contour (32) repose sur ledit banc (28) de l'embarcation similaire.

**10.** Coque (11) selon l'une quelconque des revendications 1 à 10, **caractérisée en ce qu'**elle comprend un gouvernail solidarisé à l'arrière de ladite coque (11), ledit gouvernail comprenant un corps (60) présentant une extrémité inférieure (600) prévue pour s'étendre, lorsqu'il est solidarisé à l'arrière de la coque, dans le prolongement du fond (22) de la coque (11), et un safran rabattable (29) solidarisé à rotation à l'extrémité inférieure (600) entre :
- une position rabattue dans laquelle il s'étend dans le prolongement du corps (60), et
- une position relevée dans laquelle il est relevé à l'arrière du corps (60) de manière telle qu'il ne s'étende pas au delà de l'extrémité inférieure (600) du corps (60).

**11.** Embarcation (10) comprenant une coque (11) selon l'une quelconque des revendications 1 à 11.

**13.** Embarcation (10) selon la revendication 12 propulsée par aviron (12) et/ou à la voile ou à l'aide d'une godille.
